# DEMANDE DE BREVET EUROPEEN

(11) **EP 4 840 276 A1**
(43) Date de publication de la demande: **18.11.2026**
(21) Numéro de dépôt: 26177762.7
(22) Date de dépôt: 11.05.2026
(51) Int. Cl.: A01B 3/42, A01B 3/46, A01B 59/06

(54) **DISPOSITIF DE CHARRUE SEMI-PORTÉE RÉVERSIBLE ET PROCÉDÉ DE GESTION DE LA SORTIE DE TERRE D'UNE TELLE CHARRUE**

(30) Priorité: 12.05.2025 FR 2504974
(71) Demandeur: Kuhn-Huard S.A.S, 44110 Chateaubriant (FR)
(72) Inventeur: CLAUSSE, Nicolas, 44110 ST AUBIN DES CHATEAUX (FR); GAUTRON, Herman, 44670 ST JULIEN DE VOUVANTES (FR)
(74) Mandataire: Hager, Esther Evelyne

(57) **Abrégé**

L'invention concerne un dispositif (1) de charrue semi-portée réversible comprenant un bâti (2) portant des corps de labour (3), un chariot porteur (4) sur le châssis (4') duquel est monté le bâti (2) par l'intermédiaire d'un dispositif de retournement (5) comportant au moins un vérin de retournement (6), et un timon (8) pour la traction du chariot porteur (4), le ou les vérins de retournement (6) assurant le réglage de l'aplomb des corps de labour (3).

Ce dispositif de charrue (1) est caractérisé en ce qu'il comprend en outre, d'une part, un chariot de couplage (7) pour un attelage à un tracteur, le chariot de couplage (7) étant équipé d'un vérin de levage (9) et étant relié au timon (8) par une liaison rotule (10) et, d'autre part, un moyen de commande configuré pour réaliser successivement un actionnement d'un des vérins de retournement, puis un actionnement du vérin de levage (9), aboutissant successivement à une mise en butée d'aplomb puis au levage du bâti (2), lors d'une séquence opérationnelle de sortie de terre des corps de labour (3).

## Description

La présente invention concerne le domaine du machinisme agricole, plus particulièrement celui des charrues attelées, et a pour objets un dispositif de charrue semi-portée réversible et un procédé de gestion de la sortie de terre d'une telle charrue.

Les charrues semi-portées comporte un nombre important de corps de labour et sont utilisées avec des tracteurs à forte puissance équipés de pneus larges ou de roues jumelées. De tels tracteurs peuvent aussi être équipés de chenilles. Les pneus larges ou chenilles ne permettent pas au tracteur de circuler dans la raie de labour : ainsi le tracteur se déplace à côté de la raie de labour et toutes ses roues ou chenilles circulent sur le sol non labouré. Ce type de labour est dénommé « travail hors raie » ou « labour onland ». Il évite aussi un tassement de la raie de labour et permet une meilleure position du chauffeur dans la cabine.

Une telle charrue semi-portée réversible, ressortant par exemple du document EP 3973754 de la demanderesse, comprend un bâti portant des corps de labour, un chariot porteur sur le châssis duquel est monté le bâti, ce par l'intermédiaire d'un dispositif de retournement comportant au moins un vérin, et un timon pour la traction du chariot porteur. Ce bâti peut comporter une partie avant et une partie arrière par rapport au chariot porteur, à chacune desquelles est associée une roue d'appui ou de jauge réglable qui détermine la profondeur de travail des corps de labour de la partie de bâti associée.

L'une des roues du chariot porteur circulant sur le sol non labouré et l'autre roue circulant dans la raie, il en résulte un angle d'inclinaison pour le châssis du chariot porteur qui doit être rattrapé pour assurer une profondeur de travail identique pour tous les corps de labour de la charrue. Cette correction (généralement de l'ordre d'environ 8°) est dénommé réglage de l'aplomb et elle doit être effectuée et maintenue durant le travail afin que les corps de labour demeurent perpendiculaires au plan du sol.

Dans la charrue selon EP 3 973 754 notamment, c'est ledit au moins un vérin de retournement qui assure le réglage de l'aplomb des corps de labour. Le réglage de l'aplomb est effectué de manière indépendante pour les corps de labour gauche et pour les corps de labour droit dans le cas d'une charrue réversible.

Toutefois, cette charrue ne peut être attelée qu'à des tracteurs pourvus de dispositifs de relevage trois points hydraulique.

Par le document EP 2 241 170, également au nom de la demanderesse, on connait un ensemble tracteur/charrue comprenant un chariot de couplage permettant de relier la charrue à un tracteur dépourvu de relevage trois points et muni d'un vérin de levage pour soulever et abaisser la charrue.

Pour surmonter la limitation d'utilisation de la charrue du type divulguée par le document EP 3 973 754 précité, les inventeurs ont remplacé le dispositif de relevage trois points hydraulique par un chariot de couplage et ainsi abouti à une nouvelle réalisation de charrue semi-portée réversible.

Néanmoins, avec cette nouvelle réalisation de charrue, il a été constaté que les sorties de terre de la charrue n'étaient pas satisfaisantes puisque les corps de labour, au moins en partie, avaient tendance à rester en terre lors de l'actionnement du vérin de levage et ne sortaient de terre que suite à l'alimentation en huile des vérins de retournement.

La présente invention a pour but de fournir un dispositif de charrue semi-portée réversible du type indiqué ci-dessus, pouvant être attelé à un tracteur dépourvu de dispositif d'attelage/relevage trois points hydraulique et permettant une sortie de terre satisfaisante, voire optimale, avant d'effectuer le retournement de la charrue. La solution fournie devrait être simple à mettre en œuvre et ne pas entrainer de surcoût notable, ni de complexification de la structure du dispositif de charrue.

A cet effet, l'invention a pour principal objet un dispositif de charrue semi-portée réversible comprenant un bâti portant des corps de labour, un chariot porteur sur le châssis duquel est monté le bâti par l'intermédiaire d'un dispositif de retournement comportant au moins un vérin de retournement, et un timon pour la traction du chariot porteur, le ou les vérins de retournement assurant le réglage de l'aplomb des corps de labour en travail hors raie, dispositif de charrue caractérisé en ce qu'il comprend en outre, d'une part, un chariot de couplage pour un attelage à un tracteur, le chariot de couplage étant équipé d'un vérin de levage et étant relié au timon par une liaison rotule et, d'autre part, un moyen de commande configuré pour réaliser successivement un actionnement du ou d'au moins un des vérins de retournement, puis un actionnement du vérin de levage, aboutissant successivement à une mise en butée d'aplomb puis au levage du bâti, lors d'une séquence opérationnelle de sortie de terre des corps de labour.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
[Fig. 1] est une vue de dessus d'un dispositif de charrue semi-portée réversible selon l'invention ;
[Fig. 2] est une vue partielle selon BB et à une échelle différente du chariot porteur du dispositif de charrue représenté figure 1, illustrant l'angle AP compensé par le réglage de l'aplomb ;
[Fig. 3] est une vue partielle selon la direction C et à une échelle différente du chariot porteur et d'une partie avant du bâti du dispositif de charrue représenté figure 1 ;
[Fig. 4] est une vue en perspective de l'objet représenté figure 3 ;
[Fig. 5] est une vue partielle de dessus de l'objet représenté figure 4 ;
[Fig. 6] est une vue de détail, en élévation et à une autre échelle, du dispositif de retournement représenté figures 2 à 5 ;
[Fig. 7] est une vue partielle et en perspective de dessous du dispositif de retournement représenté figure 6 ;
[Fig. 8] est une représentation schématique du circuit hydraulique du dispositif de charrue selon l'invention.

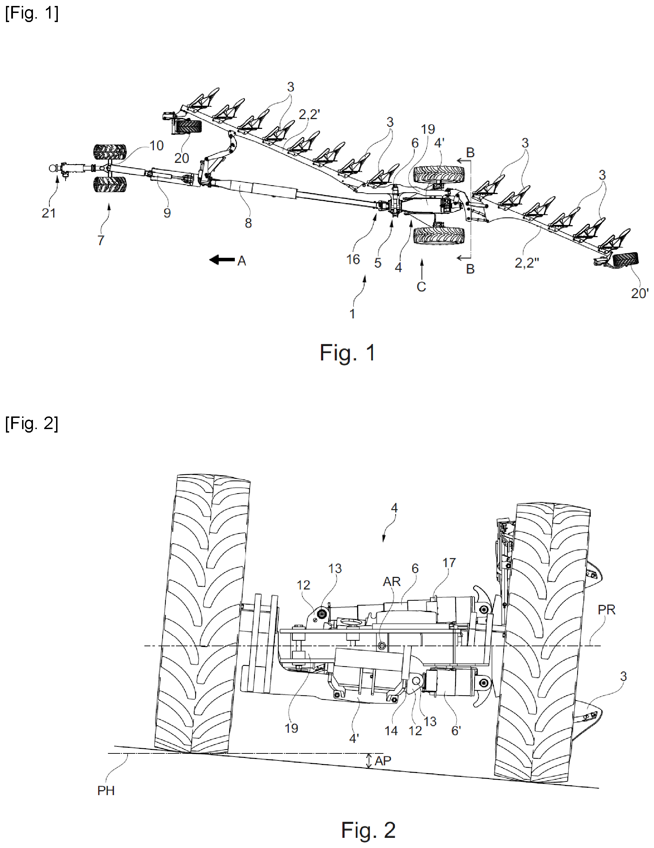

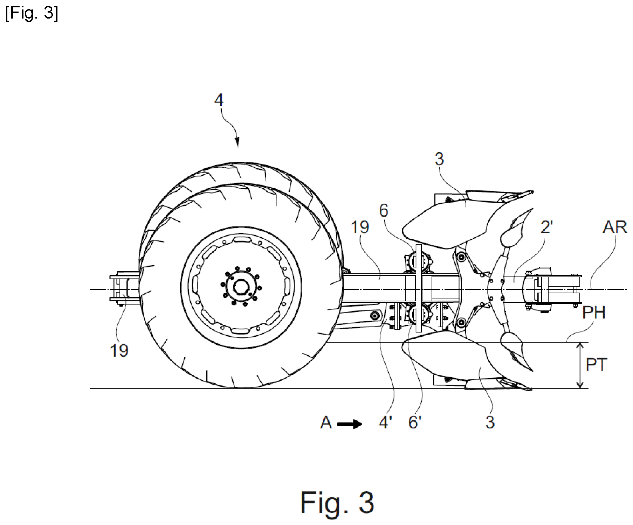

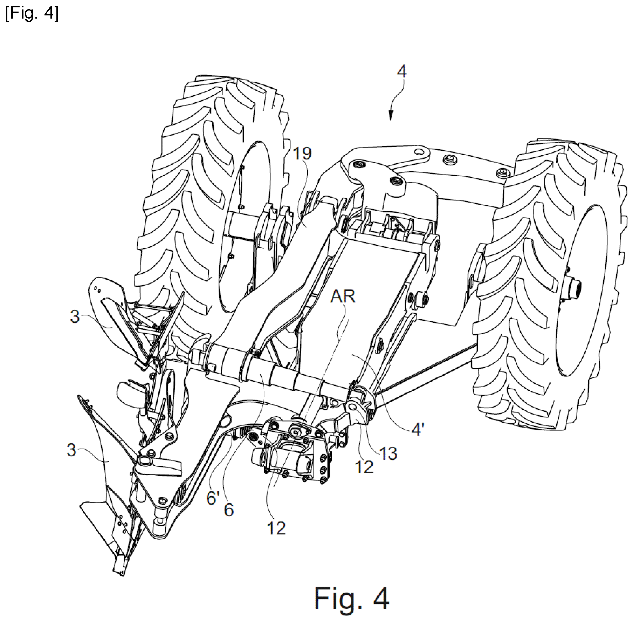

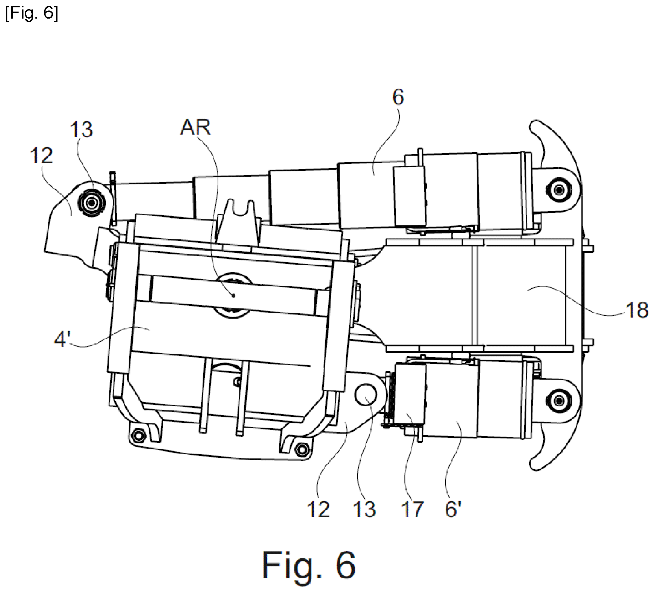

La figure 1, et de manière partielle les figures 2 à 8, illustrent un dispositif de charrue semi-portée réversible comprenant un bâti (2) portant des corps de labour (3), un chariot porteur (4) sur le châssis (4') duquel est monté le bâti (2) par l'intermédiaire d'un dispositif de retournement (5) comportant au moins un vérin de retournement (6, 6'), et un timon (8) pour la traction du chariot porteur (4), le ou les vérins (6, 6') de retournement assurant le réglage de l'aplomb des corps de labour (3). Le réglage de l'aplomb détermine la régularité de la profondeur de travail de chacun des corps de labour (3). Le réglage se fait par rotation du bâti (2) autour de l'axe de retournement (AR) et est maintenu par exemple par une butée mécanique. Les corps de labour (3) sont répartis en deux groupes, chaque groupe de corps de labour pouvant être alternativement positionné (par rotation du bâti) pour pouvoir travailler la terre.

Le bâti (2) peut comporter une partie avant (2') et une partie arrière (2") par rapport au chariot porteur (4). Ces deux parties peuvent être reliées entre elles par un segment intermédiaire (19), montée articulée en pivotement autour de l'axe de retournement (AR) sur le chariot porteur (4) et reliée cinématiquement au châssis (4') du chariot porteur (4) par le ou les vérin(s) de retournement (6, 6'). Le dispositif de retournement (5) peut comporter soit un seul vérin double action, soit deux vérins (6, 6') antagonistes comme représenté sur les figures. Les vérins de retournement (6, 6') peuvent être simple effet ou double effet.

A chacune des parties (2', 2") est associée une roue d'appui ou de jauge réglable (20, 20') qui détermine la profondeur de travail (PT) des corps de labour (3) de la partie de bâti (2', 2") les portant. Sur la figure 2 est représenté l'angle d'inclinaison (AP) du châssis (4') par rapport au plan (PH) du sol non labouré (correspondant généralement au plan dit horizontal, en l'absence de pente), qu'il y a lieu de compenser par le réglage de l'aplomb, pour que les corps de labour (3) travaillent tous à la même profondeur et soient positionnés perpendiculairement au plan (PH). Cette compensation garantit que les bandes de terre sont retournées uniformément et que la charrue fonctionne efficacement. La figure 2 montre aussi le plan (PR) passant par l'axe de retournement (AR) et correspondant au plan médian du segment intermédiaire (19). Ce plan (PR) est sensiblement parallèle au plan (PH).

Selon la réalisation illustrée à la figure 1, une roue de jauge avant (20) s'étend de préférence à l'extrémité avant du bâti (2) de la charrue, notamment à l'avant de la partie avant (2'), et une roue de jauge arrière (20') s'étend de préférence à l'extrémité arrière du bâti (2), notamment à l'arrière de la partie arrière (2"). La position de la roue de jauge considérée, respectivement sur la partie avant ou sur la partie arrière, pourrait être différente, par exemple une position plus centrale pour ne pas déborder par rapport à l'encombrement latéral et/ou longitudinal de la charrue. La roue de jauge a pour but de contrôler la profondeur de travail en limitant la descente des corps de labour (3) de la charrue dans le sol.

Conformément à l'invention, ce dispositif de charrue (1) est caractérisé en ce qu'il comprend en outre, d'une part, un chariot de couplage (7) pour un attelage à un tracteur (non représenté), le chariot de couplage (7) étant équipé d'un vérin de levage (9) et étant relié au timon (8) par une liaison rotule (10) et, d'autre part, un moyen de commande (11) configuré pour réaliser successivement un actionnement du ou d'au moins un des vérins de retournement (6, 6'), puis un actionnement du vérin de levage (9), aboutissant successivement à une mise en butée puis au levage du bâti (2), lors d'une séquence opérationnelle de sortie de terre des corps de labour (3). La mise en butée permet le réglage de l'aplomb. Le vérin de levage (9) peut être simple effet ou double effet.

Grâce aux dispositions particulières de l'invention, il est ainsi possible de proposer un dispositif (1) de charrue semi-portée réversible du type pouvant être attelé à un tracteur dépourvu de dispositif d'attelage/relevage trois points hydraulique. Un tel tracteur peut ainsi être équipé d'un support d'attelage à piton ou à boule. Le chariot de couplage (7), qui est destiné à être attelé au tracteur pour animer et déplacer la charrue semi-portée réversible, est ainsi équipé d'un système (21) adapté au support d'attelage du tracteur, par exemple un anneau d'attelage ou une calotte pour l'accouplement à boule. De plus, en prévoyant un actionnement séquentiel ordonné du ou d'au moins un des vérins de retournement (6, 6'), puis un actionnement du vérin de levage (9), on aboutit à une sortie de terre satisfaisante, voire optimale, avant d'effectuer le retournement de la charrue, lors du changement de raie. Par sortie de terre, on entend une action par laquelle les corps de labour (3) du groupe ayant travaillé le sol sortent de terre, généralement en bout d'un champ, pour que le tracteur puisse effectuer un demi-tour et reprendre le labour dans l'autre sens. Durant le demi-tour du tracteur, le bâti (2) de la charrue pivote de 180° autour de l'axe de retournement (AR) au moyen du dispositif de retournement (5) pour que l'autre groupe de corps de labour puisse être positionné pour travailler. Après le retournement du bâti (2), les corps de labour (3) de l'autre groupe vont entrer en terre pour poursuivre le labour.

La charrue illustrée sur la figure 1 est équipée de quatorze corps de labour. La partie avant (2') du bâti (2) porte huit corps de labour (3) et la partie arrière (2") porte six corps de labour (3). Une charrue équipée d'un grand nombre de corps de labour, plus de dix corps de labour, aura un important débit de chantier puisque sa largeur de travail est importante. Une telle charrue est ainsi déplacée par un tracteur de forte puissance, généralement de plus de 180 chevaux. Le poids de cette charrue semi-portée est supporté partiellement par le tracteur et partiellement par le chariot porteur (4). La charrue illustrée est réversible, elle peut labourer dans les deux directions grâce à ses deux groupes de corps de labour. La charrue va retourner la terre à droite puis à gauche, ou inversement. Le dispositif de retournement (5) permet d'effectuer cette alternance d'utilisation entre les deux groupes de corps de labour pour un chantier de labour plus efficace. Dans l'exemple de réalisation, le dispositif de retournement (5) avec les deux vérins de retournement (6, 6') est prévu sur le chariot porteur (4).

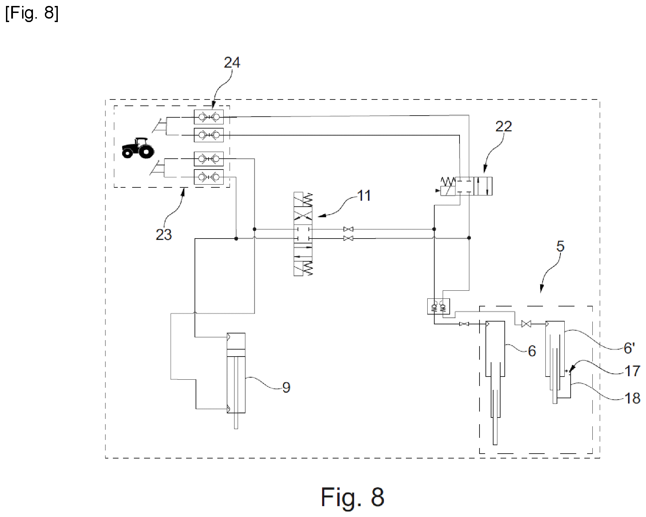

En accord avec un mode de réalisation très avantageux de l'invention, ressortant par exemple de la figure 8, le moyen de commande (11) consiste en un moyen sélectif de connexion fluidique et d'alimentation hiérarchisée entre le circuit hydraulique de commande du vérin de levage (9) et le circuit hydraulique de commande du ou des vérin(s) de retournement (6, 6').

On aboutit ainsi à une solution simple à mettre en œuvre et n'entrainant pas de surcoût notable, ni de complexification de la construction physique de la charrue, le moyen de commande (11) correspondant à un moyen additionnel du circuit hydraulique de la charrue.

Selon une première variante de réalisation possible, le moyen de commande (11) consiste en une vanne à commande manuelle, mécanique ou électrique.

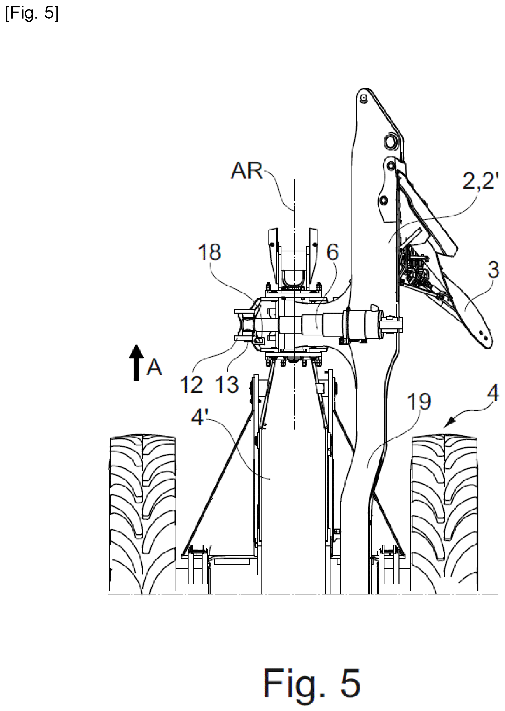

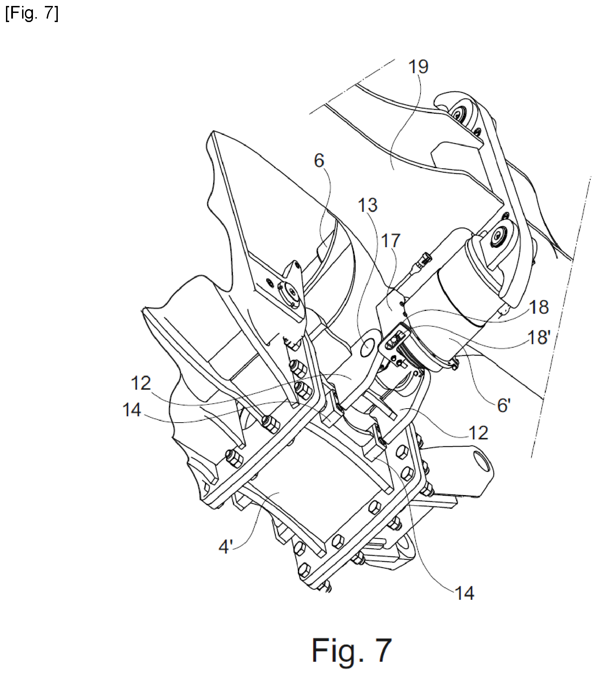

Conformément à une construction préférée de cette première variante, ressortant à titre d'exemple de la figure 8, le moyen de commande (11) consiste en une électrovanne contrôlée par un capteur (17), associé à ou présent sur le ou chacun des vérins de retournement (6, 6'). Plus précisément, le capteur (17) va permettre d'indiquer la position du vérin de retournement (6, 6') par détection. Le capteur (17) va pouvoir détecter si le vérin est en position rétractée ou en position étendue. Avantageusement, le capteur (17) est un capteur de proximité, il va permettre de signaler la présence d'un objet (ici métallique) à détecter et ainsi d'initier une action. Dans l'exemple de réalisation représenté à la figure 7, il s'agit d'un capteur inductif. Le capteur (17) va détecter la présence ou l'absence d'un objet au niveau de sa surface de détection. Il fonctionne avantageusement sans contact, son usure est donc limitée. Comme le montrent à titre d'exemple les figures 5 à 7, le capteur (17) est fixé sur le cylindre du vérin de retournement (6, 6') et l'objet à détecter par le capteur (17) est fixé sur la tige du vérin de retournement (6, 6') correspondant. L'objet à détecter est par exemple une tôle métallique (18), pourvue d'une lumière (18'). Le capteur (17) est ainsi apte à collecter des informations sur la position du vérin de retournement (6, 6'). De cette information pourra être déduite la position du bâti (2) et donc par exemple quel groupe de corps de labour (3) est en terre lors du labour. La lumière ménagée dans la tôle (18) correspond à la plage de fonctionnement de la charrue lors de labour pour compenser l'angle d'inclinaison (AP) du châssis (4').

Selon une seconde variante de réalisation possible, non représentée aux figures annexées, le moyen de commande (11) consiste en un distributeur à commande manuelle, mécanique ou électrique.

Quelle que soit la variante constructive du mode de réalisation précité du moyen de commande (11), ce dernier est configuré de telle manière que la commande du vérin de levage (9) agit prioritairement sur le ou l'un des vérins de retournement (6, 6') jusqu'à une mise en butée dudit vérin (mise en butée pour l'aplomb), pour ensuite seulement agir effectivement sur le vérin de levage (9). Autrement dit, lors d'une commande du vérin de levage (9) pour sortir la charrue de terre, l'huile du circuit hydraulique circule d'abord dans la grande chambre du ou de l'un des vérins (6, 6') de retournement afin de redresser le bâti (2) autour de l'axe de retournement (AR), par compensation de l'angle d'inclinaison (AP) - généralement d'environ 8°- résultant de l'orientation inclinée du chariot porteur (4), avant de soulever effectivement la charrue par actionnement du vérin de levage (9). Grâce à ce moyen de commande, c'est d'abord l'un des vérins de retournement (6, 6') qui va être alimenté en huile pour redresser le bâti (2) autour de l'axe de retournement (AR) jusqu'à venir en butée, et ensuite seulement le vérin de levage (9) est alimenté pour effectuer la sortie de terre des corps de labour (3). Le vérin de levage (9) agit principalement sur les corps de labour (3) fixés sur la partie avant (2'). Les corps de labour de la partie arrière (2") sortent de terre via au moins un actionneur au niveau du chariot porteur (4). D'ordinaire la sortie de terre comme l'entrée en terre des corps de labour (3) est progressive. Les corps de labour de la partie avant (2') entrent et sortent de terre avant ceux de la partie arrière (2"). Pour réduire les zones non labourées en bout de champ, la sortie de terre des corps de labour (3) de la partie arrière (2") est effectuée avec un certain délai après la sortie de terre des corps de labour de la partie avant (2'). L'actionneur du chariot porteur (4) est avantageusement commandé lorsque le premier corps de la partie arrière (2") atteint la position où le premier corps de la partie avant (2') est entré ou sorti de terre.

Comme cela ressort à titre d'exemple des figures 7 et 8, la ou chaque butée d'aplomb peut consister en une butée mécanique entre, d'une part, une chape (12) reliant le ou un des vérins de retournement (6, 6') au châssis (4') du chariot porteur (4) par le biais de deux liaisons pivot, et, d'autre part, le châssis (4'), par exemple des sites d'appui (14) de ce dernier, la position de butée étant détectée par un capteur (17) contrôlant le moyen de commande (11). La rotation du bâti (2) autour de l'axe de retournement (AR) est bloquée lorsque la chape (12) est appuyée contre le site d'appui (14) correspondant. Dans cette position, l'aplomb de la charrue est en butée.

Selon la réalisation représentée sur la figure 7, la mise en butée est réalisée par une double chape (12) et un double site d'appui (14). Une chape (12) et un site d'appui (14) s'étendent de part et d'autre de l'articulation (13) reliant la tige de vérin de retournement (6, 6') à la chape (12). Sur la figure 7, la double chape (12) n'est pas en contact (en butée) contre le site d'appui (14) et on remarque que le capteur (17) est situé en regard de la lumière (18') de la tôle métallique (18). Plus précisément, le capteur (17) s'étend sensiblement au centre de la lumière (18'). Lorsqu'au moins un vérin de retournement (6, 6') pousse la chape (12) contre sur le site d'appui (14) correspondant, le bâti (2) vient en butée contre le chariot porteur (4) et le capteur (17) respectif est positionné en regard de l'extrémité libre de la tôle (18), dans le prolongement de la lumière (18'). Cette position est représentée schématiquement sur la figure 8. Lorsque le bâti (2) est en butée, la surface de détection du capteur (17) détecte l'extrémité libre de la tôle (18), ce qui met fin au mouvement du vérin de retournement (6, 6'). On note que c'est le capteur (17) du vérin de retournement (6, 6') en position rétractée qui est actif.

Le fonctionnement pratique du dispositif de charrue (1) considéré en relation avec le circuit hydraulique représenté sur la figure 8 et la nature et le fonctionnement du capteur 17 considéré en relation avec les figures 7 et 8 sont décrits plus en détail ci-après.

Durant le labour, le distributeur (22) est dans un état bloqué : c'est-à-dire que le(s) vérin(s) de retournement (6, 6') n'est(ne sont) pas alimenté(s). Le distributeur (22) changera de position lorsque le dispositif de retournement (5) devra être commandé pour réaliser le retournement du bâti (2) de la charrue autour de l'axe de retournement (AR). L'un ou l'autre des vérins de retournement (6, 6') sera alors alimenté. Pour atteindre la position de transport de la charrue, le dispositif de retournement (5) sera également utilisé.

Pour la sortie de terre des corps de labour (3), le distributeur tracteur (23) est actionné pour rétracter la tige du vérin de levage (9). Comme le distributeur (11) est ouvert le fluide va d'abord remplir la chambre d'un des vérins de retournement (6, 6') car cela demande obligatoirement moins d'effort mécanique. Selon le schéma de la figure 8, c'est le vérin de retournement (6') qui va pousser la chape (12) contre le site d'appui (14). La tige du vérin de retournement (6') va sortir jusqu'à ce que le capteur (17) détecte la tôle (18). Lorsque le capteur (17) détecte l'extrémité libre (18') de la tôle (18), le distributeur (11) change de position pour bloquer l'alimentation en fluide vers le dispositif de retournement (5). Le fluide alimentera donc seulement le vérin de levage (9) dont la tige se rétracte pour soulever les corps de labour (3). Dans la réalisation de la figure 8, les vérins de retournement (6, 6') sont des vérins hydrauliques simple effet, le vérin de levage (9) est un vérin double effet, les distributeurs 11 et 22 sont des électrodistributeurs et le distributeur tracteur (23) est à pilotage manuel par levier. L'autre distributeur tracteur (24) permet de commander le dispositif de retournement (5).

Préférentiellement, le dispositif de charrue (1) comprend deux vérins de retournement (6, 6'), préférentiellement deux vérins antagonistes, et à chaque vérin (6, 6') est associée une butée d'aplomb.

En vue de disposer d'une grande flexibilité de manœuvre, le timon (8) est relié au châssis (4') du chariot porteur (4) par un joint de cardan (16).

D'autres caractéristiques constructives du dispositif de charrue (1) selon l'invention, en particulier les structures et les assemblages mutuels des parties de châssis (2', 2") et du chariot porteur (4), peuvent correspondre à celles divulguées par le document EP 3 973 754 de la demanderesse.

L'invention vise également un procédé de gestion de la séquence opérationnelle de sortie de terre d'un dispositif de charrue (1) semi-portée réversible tel que décrit ci-dessus, en fin de travail hors raie.

Ce procédé consiste, par le biais d'un même circuit hydraulique alimenté par le tracteur tirant le dispositif de charrue (1) et équipé d'un moyen de commande (11) adapté, à réaliser successivement i) un actionnement du ou d'au moins un des vérins de retournement (6, 6') jusqu'à aboutir à une mise en butée d'aplomb, puis ii) un actionnement du vérin de levage (9) pour lever le bâti (2) de manière à extraire les corps de labour (3) du sol, la mise en butée d'aplomb étant conservée durant la phase de levage.

Avantageusement, les deux phases opératoires successives d'actionnement du ou d'un des vérins de retournement (6, 6') et d'actionnement du vérin de levage (9) sont réalisés par l'alimentation contrôlée du vérin de retournement (6, 6') concernée jusqu'à venir en butée d'aplomb, cette position étant détectée par un capteur de position (17), préférentiellement associé au vérin de retournement concerné et qui contrôle le moyen de commande (11).

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Dispositif (1) de charrue semi-portée réversible comprenant un bâti (2) portant des corps de labour (3), un chariot porteur (4) sur le châssis (4') duquel est monté le bâti (2) par l'intermédiaire d'un dispositif de retournement (5) comportant au moins un vérin de retournement (6, 6'), et un timon (8) pour la traction du chariot porteur (4), le ou les vérins de retournement (6, 6') assurant le réglage de l'aplomb des corps de labour (3), dispositif de charrue (1) **caractérisé en ce qu'**il comprend en outre, d'une part, un chariot de couplage (7) pour un attelage à un tracteur, le chariot de couplage (7) étant équipé d'un vérin de levage (9) et étant relié au timon (8) par une liaison rotule (10) et, d'autre part, un moyen de commande (11) configuré pour réaliser successivement un actionnement du ou d'au moins un des vérins de retournement (6, 6'), puis un actionnement du vérin de levage (9), aboutissant successivement à une mise en butée d'aplomb puis au levage du bâti (2), lors d'une séquence opérationnelle de sortie de terre des corps de labour (3).

2. Dispositif (1) de charrue selon la revendication 1, **caractérisé en ce que** le moyen de commande (11) consiste en un moyen sélectif de connexion fluidique et d'alimentation hiérarchisée entre le circuit hydraulique de commande du vérin de levage (9) et le circuit hydraulique de commande du ou des vérin(s) de retournement (6, 6').

3. Dispositif (1) de charrue selon la revendication 1 ou 2, **caractérisé en ce que** le moyen de commande (11) consiste en une vanne à commande manuelle, mécanique ou électrique.

4. Dispositif (1) de charrue selon la revendication 3, **caractérisé en ce que** le moyen de commande (11) consiste en une électrovanne contrôlée par un capteur (17), associé à ou présent sur le ou chacun des vérins de retournement (6, 6').

5. Dispositif (1) de charrue selon la revendication 1 ou 2, **caractérisé en ce que** le moyen de commande (11) consiste en un distributeur à commande manuelle, mécanique ou électrique.

6. Dispositif (1) de charrue selon l'une quelconque des revendications 1 à 5, **caractérisé en ce que** la ou chaque butée d'aplomb consiste en une butée mécanique entre, d'une part, une chape (12) reliant le ou un des vérins de retournement (6, 6') au châssis (4') du chariot porteur (4) par le biais de deux liaisons pivot, et, d'autre part, le châssis (4'), par exemple des sites d'appui (14) de ce dernier, la position de butée d'aplomb étant détectée par un capteur (17) contrôlant le moyen de commande (11).

7. Dispositif (1) de charrue selon l'une quelconque des revendications 1 à 6, **caractérisé en ce que** qu'il comprend deux vérins de retournement (6, 6'), préférentiellement deux vérins antagonistes, et **en ce qu'**à chaque vérin (6, 6') est associée une butée d'aplomb.

8. Dispositif (1) de charrue selon l'une quelconque des revendications 1 à 7, **caractérisé en ce que** le timon (8) est relié au châssis (4') du chariot porteur (4) par un joint de cardan (16).

9. Procédé de gestion de la séquence opérationnelle de sortie de terre d'un dispositif de charrue (1) semi-portée réversible selon l'une quelconque des revendications 1 à 8, en fin de travail hors raie, le procédé consistant, par le biais d'un même circuit hydraulique alimenté par le tracteur tirant le dispositif de charrue et équipé d'un moyen de commande (11) adapté, à réaliser successivement i) un actionnement du ou d'au moins un des vérins de retournement (6, 6') jusqu'à aboutir à une mise en butée d'aplomb, puis ii) un actionnement du vérin de levage (9) pour lever le bâti (2) de manière à extraire les corps de labour (3) du sol, la mise en butée d'aplomb étant conservée durant la phase de levage.

10. Procédé selon la revendication 9, caractérisé en ce les deux phases opératoires successives d'actionnement du ou d'un des vérins de retournement (6, 6') et d'actionnement du vérin de levage (9) sont réalisés par l'alimentation contrôlée du vérin de retournement (6, 6') concernée jusqu'à venir en butée d'aplomb, cette position étant détectée par un capteur de position (17), préférentiellement associé au vérin de retournement concerné et qui contrôle le moyen de commande (11).
